Europäisches Patentamt

European Patent Office

Office européen des brevets

(19)

(11) Publication number: **0 271 457 B1**

(12) **EUROPEAN PATENT SPECIFICATION**

(45) Date of publication of patent specification: **27.11.91**  (51) Int. Cl.⁵: **F24C 15/20, F24F 3/16, B03C 3/08**

(21) Application number: **87830436.9**

(22) Date of filing: **14.12.87**

(54) **An electrostatic air cleaner particularly for kitchen forced suction hoods.**

(30) Priority: **15.12.86 IT 2269186**

(43) Date of publication of application:
**15.06.88 Bulletin 88/24**

(45) Publication of the grant of the patent:
**27.11.91 Bulletin 91/48**

(84) Designated Contracting States:
**AT BE CH DE ES FR GB GR LI LU NL SE**

(56) References cited:
**CH-A- 475 524**
**DE-A- 2 146 288**
**US-A- 1 335 758**
**US-A- 3 747 301**

(73) Proprietor: **Mantini, Franco**
**Via La Spina, 29**
**I-60044 Fabriano (Ancona)(IT)**

Proprietor: **Mancini, Sergio**
**Via La Spina, 4**
**I-60044 Fabriano (Ancona)(IT)**

(72) Inventor: **Mantini, Franco**
**Via La Spina, 29**
**I-60044 Fabriano (Ancona)(IT)**
Inventor: **Mancini, Sergio**
**Via La Spina, 4**
**I-60044 Fabriano (Ancona)(IT)**

(74) Representative: **Perani, Aurelio et al**
**c/o JACOBACCI-CASETTA & PERANI Via Visconti di Modrone 7**
**I-20122 Milano(IT)**

Rank Xerox (UK) Business Services

## Description

This invention relates to a kitchen forced suction hood electrostatic air cleaner, of a type which comprises an insulative supporting shroud having an inlet opening and an outlet opening for the air being cleaned.

It is a well-known fact that, as a consequence of air pollution, the ambient air of the home spaces where one lives contains particulate matter of various description, such as dust, soot, microparticles, and bacteria, which are breathed and harmful of one's health.

Thus, dwelling spaces in particular should be equipped with air cleaning facilities effective to filter out and trap such particulate matter.

To this aim, the prior art proposes a first approach which consists of providing sophisticated air cleaning equipment, usually associated with air conditioning systems, and serves its purpose effectively but is evidently expensive and complicated to install and maintain in a home environment.

The patent document DE-A-2 146 288 describes a kitchen forced suction hood of a type which comprises internally a dust provided with a suction fan, an electrostatic air cleaner having inlet and outlet openings for the air to be cleaned and being mounted in said duct at such a location as to have the air flow therethrough directed vertically in the in the immediate vicinity of the air intake and outlet.

However in this kitchen hood the air flow cannot invest the electrostatic air cleaner in its entire length, loosing therefore part of the cleaning effect.

A second patent document No. US 1,335,758 describes an electrostatic air cleaner of a type which comprises an insulating shroud having an inlet opening and an outlet opening for the air being cleaned, a platelike electrode carried within the shroud to extend between said openings and an array of parallel wire cables which are installed in the shroud on opposite sides of the electrode.

This device is also provided with weights in order to keep the wires in the vertical position to let the suspended matter be discharged in the bins. Therefore it cannot be positioned in a kitchen hood according to the necessities, but must be kept always in a predetermined position.

Moreover, such prior apparatuses, while serving substantially their purpose, have a number of drawbacks connected with their high cost, bulk, need for cleaning the electrostatic cleaner plates at frequent intervals, and the use of active carbon filters, which require to be replaced periodically.

The technical problem underlying this invention is to provide a kitchen forced suction hood electrostatic air cleaner which has such constructional and operational features as to be suitable for installation in a conventional design forced suction hood for kitchen applications so as to avail itself of the suction action provided by the fan already equipping such a hood, to then return the cleaned air to the kitchen. Thus, the drawbacks noted in connection with the cited prior art apparatus would be obviated.

This technical problem is solved by a kitchen forced suction hood electrostatic air cleaner of the type specified in the characterizing part of claim 1.

The features and advantages of this invention will become apparent from the following detailed description of an embodiment thereof, given by way of example and not of limitation with reference to the figures in the accompanying drawing.

In the drawing:

Figure 1 shows a part-sectional perspective view of an electrostatic air cleaner according to the invention;

Figure 2 is a side sectional view of the air cleaner taken along the line II in Figure 1; and

Figure 3 is a side sectional view of a kitchen forced suction hood incorporating the air cleaner of Figure 1.

With reference to the drawing figures, the numeral 1 generally designates an electrostatic air cleaner according to this invention. The air cleaner 1 comprises a supporting shroud 2 formed from an insulating material from the electric standpoint, which has an inlet opening 3 and an outlet opening 4 for the air being cleaned.

Said openings 3 and 4 are formed respectively through opposedly located side walls 5 and 6 of the shroud 2.

A plate-like electrode 7 made of a conductive material is carried in the shroud 2 to extend between said openings, 3 and 4, in a parallel direction to the air flow.

Said plate-like electrode 7 is held conventionally within the shroud 2 by opposed side walls 8 and 9, e.g. by means of a longitudinal slot formed inwardly on each said side walls, 8 and 9, and not shown.

A first bundle 11 and a second bundle 12 of wire cables 10 lying parallel to one another are installed inside the shroud 2 at locations respectively overlying and underlying said plate-like electrode 7 at a set distance therefrom.

The wire cables 10 in each of said bundles 11 and 12 are connected electrically via a small rigid crossbar 16 attached to their ends.

Thus, both the plate-like electrode 7 and the wire cable bundles 11 and 12, serving in turn electrode functions, are intended for connection to respective poles of a high potential difference DC voltage source; the plate-like electrode 7, for example, would be connected to the negative pole of such a voltage source, and both bundles 11 and 12 of wire cables would be connected to the positive pole of the source 15.

Such connections are established with the intermediary of quick-connect contact means located externally on the shroud 2 and omitted from the drawing.

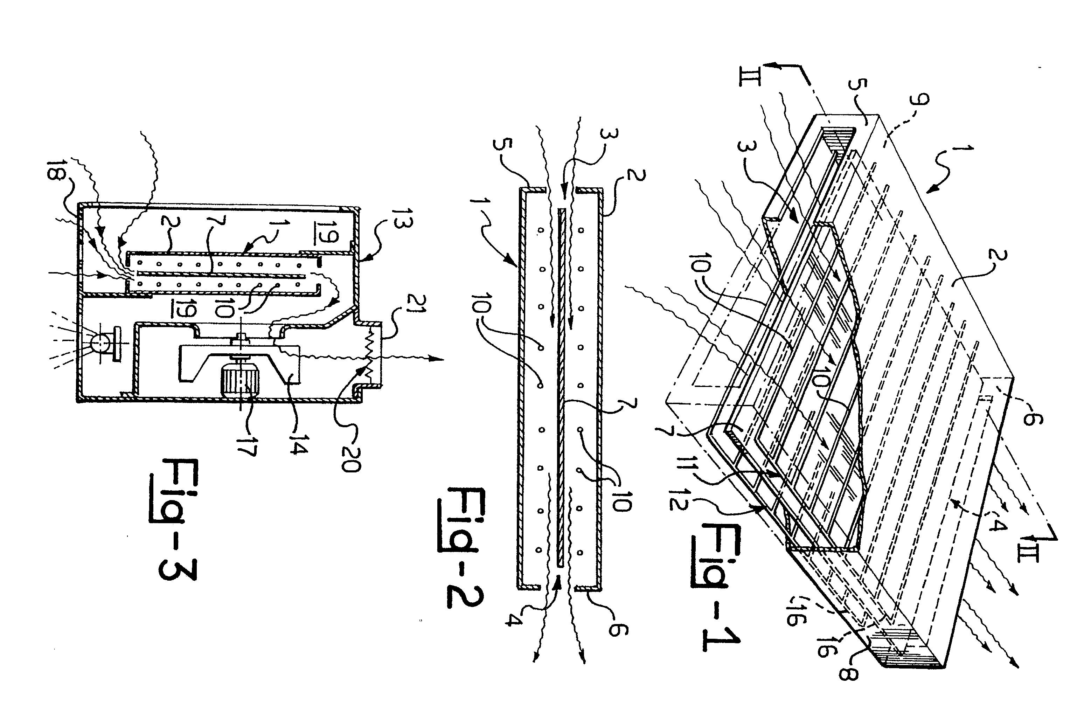

Advantageously, with particular reference to the embodiment of Figure 3, the electrostatic air cleaner 1 is installed in a kitchen forced suction hood indicated at 13. The forced suction hood 13 is to a known design.

The hood 13 is provided with an internally mounted suction fan 14 driven conventionally by an electric motor 17 and adapted in operation to draw in ambient air through a grate opening 18 and a suction compartment or duct 19.

The air cleaner 1 is mounted within the compartment 19 at such a location as to have the air flow therethrough directed vertically. Further, an electric resistor 20 is mounted across an outlet duct 21 provided to re-introduce the air cleaned through the hood 13 into the space.

The operation of the kitchen forced suction hood as incorporating the electrostatic air cleaner of this invention will be described herein below.

When the suction fan 14 is operated, the hood 13 is made to perform its suction function by drawing in ambient air through the duct 19. At the same time, the electrostatic air cleaner 1 becomes operative to filter out particulate matter contained in the air.

More specifically, the microparticles of various nature which make up such particulate matter are first ionized by the wire cable bundles 11 and 12 functioning as positive electrodes, and then attracted onto the plate-like electrode 7 with opposite polarity.

The flowing of air through the electrostatic air cleaner involves ionization of the air molecules and consequent release of ozone. Accordingly, any fumes and offensive odours contained in the air to be cleaned are subdued by the oxidizing action of ozone.

The air thus cleaned is then cycled back into the space whence it had been drawn originally after flowing past the resistance heater 20 which, being brought to a higher temperature than 250°C, enables restoration of the ozone to the oxygen stable state.

A first, apparent advantages of the electrostatic air cleaner according to the invention is that the parallel wire cables forming electrodes promote ionization of the particulate matter and oxygen molecules in the air because they afford the ability to power the air cleaner with a high potential difference despite the short distance separating said wire cables from the plate-like central electrode. Furthermore, its simple construction combined with its compact size enable the air cleaner to be placed in kitchen forced suction hoods of otherwise conventional design.

The upright position imparted to the air cleaner within the suction hood will keep the air cleaner maintenance and periodic cleaning requirements at a minimum since the particulate matter picked up by the plate-like central electrode is allowed to fall naturally toward the grate 18 of the hood. With this position setting, the use of a steam barrier for the intake air is also made unnecessary.

The invention is also particulatly low in cost and suitable for large scale industrial production.

## Claims

1. A kitchen forced suction hood electrostatic air cleaner (1) of a type which comprises an insulative supporting shroud (2) having an inlet opening (3) and an outlet opening (4) for the air being cleaned, characterized in that a single plate-like electrode (7) is carried within the shroud (2) to extend between said openings (3, 4), and that an array (11, 12) of parallel wire cable electrodes (10) of opposite charge to the plate-like electrode (7) are rigidly installed in the supporting shroud (2) at locations overlying and underlying said electrode (7).

2. A kitchen forced suction hood comprising an electrostatic air cleaner according to claim 1.

3. A kitchen forced suction hood (13) of a type which comprises internally a duct (19) provided with a suction fan (14) and an electrostatic air cleaner (1) according to claim 1 having inlet (3) and outlet (4) openings for the air being cleaned, characterized in that said cleaner is mounted vertically in said duct (19) and that the hood comprises an outlet duct (21) effective to return the cleaned air to said kitchen and an electric resistance heater (20) mounted transversely across said outlet duct (21).

## Revendications

1. Epurateur d'air électrostatique (1) pour hotte à aspiration forcée de cuisine, d'un type qui comprend un capot de support isolant (2) ayant une ouverture d'entrée (3) et une ouverture de sortie (4) pour l'air en cours d'épuration, caractérisé en ce qu'une électrode (7) unique, en forme de plaque est maintenue dans le capot (2) pour s'étendre entre lesdites ouvertures (3, 4), et en ce qu'il est prévu un réseau (11, 12) d'électrodes (10) en câble à fils parallèles, de charge opposée à l'électrode en forme de plaque (7), installées rigidement dans le capot de support (2) à des emplacements susjacent et sous-jacent à ladite électrode (7).

2. Hotte aspirante de cuisine comprenant un épurateur d'air électrostatique selon la revendication 1.

3. Hotte aspirante de cuisine (13) d'un type qui comprend à l'intérieur un conduit (19) équipé d'un ventilateur aspirant (14) et d'un épurateur d'air électrostatique (1) selon la revendication 1, ayant des ouvertures d'entrée (3) et de sortie (4) pour l'air en cours d'épuration, caractérisée en ce que ledit épurateur est monté verticalement dans ledit conduit (19) et que la hotte comprend un conduit de sortie (21) efficace pour renvoyer l'air épuré à ladite cuisine et un élément chauffant à résistance électrique (20), monté transversalement au dit conduit de sortie (21).

**Patentansprüche**

1. Elektrostatischer Luftreiniger (1) für eine Küchenabzugshaube, bei dem eine isolierende und tragende Ummantelung (2) vorgesehen ist, die eine Einlaßöffnung (3) und eine Auslaßöffnung (4) für die zu reinigende Luft aufweist, dadurch gekennzeichnet, daß innerhalb der Ummantelung (2) eine einzelne plattenartige Elektrode (7) so gehalten ist, daß sie sich zwischen den Öffnungen (3, 4) erstreckt und daß eine Reihe (11, 12) von parallelen Drahtkabelelektroden (10) mit gegenüber der plattenartigen Elektrode (7) entgegengesetzter Ladung in der Tragummantelung (2) in Bereichen oberhalb und unterhalb der Elektrode (7) fest eingebaut ist.

2. Küchenabzugshaube mit einem elektrostatischen Luftreiniger nach Anspruch 1.

3. Küchenabzugshaube (13) der Art, die innen einen Kanal (19) mit einem Absauggebläse (14) und einem elektrostatischen Luftreiniger (1) nach Anspruch 1 mit einer Einlaß- (3) und einer Auslaßöffnung (4) für die zu reinigende Luft aufweist, dadurch gekennzeichnet, daß der Reiniger vertikal in dem Kanal (19) angebracht ist und daß die Haube mit einem Auslaßkanal (21) versehen ist, durch den die gereinigte Luft in die Küche zurückgeführt werden kann, wobei quer über diesem Auslaßkanal (21) eine elektrische Widerstandsheizung (20) angebracht ist.

**Fig-1**

**Fig-2**

**Fig-3**